# EUROPEAN PATENT SPECIFICATION

(11) **EP 4 523 840 B1**
(45) Date of publication and mention of the grant of the patent: **05.08.2026**
(21) Application number: 23839196.5
(22) Date of filing: 27.01.2023
(51) Int. Cl.: B23K 31/00

(54) **WELDING ASSISTANCE DEVICE, WELDING ASSISTANCE METHOD, AND PROGRAM**
SCHWEISSHILFSVORRICHTUNG, SCHWEISSHILFSVERFAHREN UND PROGRAMM
DISPOSITIF D'AIDE AU SOUDAGE, PROCÉDÉ D'AIDE AU SOUDAGE ET PROGRAMME

(30) Priority: 12.07.2022 JP 2022111538
(43) Date of publication of application: 19.03.2025
(73) Proprietor: Mitsubishi Heavy Industries, Ltd., Tokyo 100-8332 (JP)
(72) Inventor: YASUDA, Masayuki, Tokyo 100-8332 (JP); NISHIKI, Hisashi, Tokyo 100-8332 (JP); NAGAO, Kenichi, Tokyo 100-8332 (JP); NAKASHIMA, Yoshiyuki, Tokyo 100-8332 (JP); MATSUBARA, Takanobu, Tokyo 100-8332 (JP); YAMASHINA, Yusuke, Tokyo 100-8332 (JP)
(74) Representative: Cabinet Beau de Loménie
(86) International application number: PCT/JP2023/002602
(87) International publication number: WO 2024/014016

(56) References cited:
- WO-A1-2020/077694
- CN-B- 110 116 254
- JP-A- 2011 183 455
- JP-A- 2022 086 803
- JP-A- H11 314 159

## Description

### TECHNICAL FIELD

The present disclosure relates to a welding assistance device, a welding assistance method, and a program.

### BACKGROUND ART

As a technology for improving welding quality, for example, Patent Document 1 discloses a technology of performing automatic welding by machine-learning a physical quantity related to arc welding, such as an appearance of a welding bead, and an arc welding condition, such as a welding speed and a protrusion length, and adjusting the arc welding condition based on a physical quantity obtained from imaging data.

### Citation List

### Patent Document

Patent Document 1: Japanese Patent No. 6126174

Document JPH11314159A discloses a deciding method for defect in TIG welding that involves detecting difference between coordinate points using standard threshold values and bind threshold line.

### SUMMARY OF INVENTION

### Technical Problem

However, since the technology disclosed in Patent Document 1 targets an automatic welding robot, it is difficult to apply the technology to welding work by a welder. Therefore, there is a demand for a method of suppressing an occurrence of a welding defect by assisting welding work performed by a welder.

The present disclosure has been made in view of such problems and provides a welding assistance device, a welding assistance method, and a program capable of suppressing an occurrence of a welding defect in welding work performed by a welder. Solution to Problem

According to an aspect of the present disclosure, a welding assistance device includes an acquisition unit configured to acquire welding data including a plurality of parameters indicating a welding state, an estimation unit configured to estimate a type of a welding defect occurring at a welding portion based on a defect estimation model using the welding data as an explanatory variable and using the type of the welding defect as an objective variable, and an analysis unit configured to specify a factor parameter contributing to the occurrence of the welding defect based on the welding data and the estimated type of the welding defect and to generate analysis data indicating a correlation between a magnitude of a value of the specified factor parameter and a magnitude of a contribution degree to the welding defect.

According to another aspect of the present disclosure, a welding assistance method includes a step of acquiring welding data including a plurality of parameters indicating a welding state, a step of estimating a type of a welding defect occurring at a welding portion based on a defect estimation model using the welding data as an explanatory variable and using the type of the welding defect as an objective variable, and a step of specifying a factor parameter contributing to the occurrence of the welding defect based on the welding data and the estimated type of the welding defect and generating analysis data indicating a correlation between a magnitude of a value of the specified factor parameter and a magnitude of a contribution degree to the welding defect.

According to still another aspect of the present disclosure, there is provided a program causing a welding assistance device to perform: a step of acquiring welding data including a plurality of parameters indicating a welding state; a step of estimating a type of a welding defect occurring at a welding portion based on a defect estimation model using the welding data as an explanatory variable and using the type of the welding defect as an objective variable; and a step of specifying a factor parameter contributing to the occurrence of the welding defect based on the welding data and the estimated type of the welding defect and generating analysis data indicating a correlation between a magnitude of a value of the specified factor parameter and a magnitude of a contribution degree to the welding defect.

### Advantageous Effects of Invention

With the welding assistance device, the welding assistance method, and the program according to the present disclosure, it is possible to suppress the occurrence of a welding defect in welding work performed by a welder.

### BRIEF DESCRIPTION OF DRAWINGS

[FIG. 1] A block diagram representing a functional configuration of a welding assistance device according to an embodiment of the present disclosure.
[FIG. 2] A flowchart representing an example of a learning process in the welding assistance device according to the embodiment of the present disclosure.
[FIG. 3] A flowchart representing an example of an analysis process of a welding defect in the welding assistance device according to the embodiment of the present disclosure.
[FIG. 4] A diagram representing an example of an estimation result of a welding defect according to the embodiment of the present disclosure.
[FIG. 5] A first diagram representing an example of analysis data according to the embodiment of the present disclosure.
[FIG. 6] A second diagram representing the example of the analysis data according to the embodiment of the present disclosure.
[FIG. 7] A third diagram representing the example of the analysis data according to the embodiment of the present disclosure.
[FIG. 8] A flowchart representing an example of a presentation process of assistance information in the welding assistance device according to the embodiment of the present disclosure.
[FIG. 9] A diagram representing an example of the assistance information according to the embodiment of the present disclosure.

### DESCRIPTION OF EMBODIMENTS

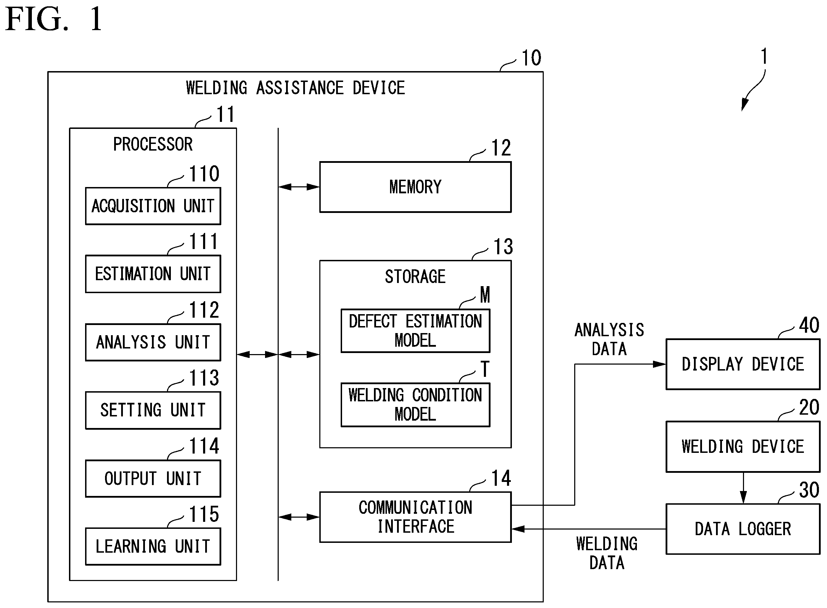

Hereinafter, a welding assistance system 1 and a welding assistance device 10 according to an embodiment of the present disclosure will be described with reference to FIGS. 1 to 9.

### (Overall Configuration of Welding Assistance System)

FIG. 1 is a block diagram representing a functional configuration of a welding assistance device according to an embodiment of the present disclosure.

As represented in FIG. 1, the welding assistance system 1 according to the present embodiment includes the welding assistance device 10, a welding device 20, a data logger 30, and a display device 40.

The welding device 20 includes an operation panel on which devices such as switches and levers for adjusting various parameters having an influence on a welding state, and instruments are provided. A welder performs welding work while adjusting each parameter on the operation panel of the welding device. These parameters are, for example, a welding current, a welding voltage, a protrusion length of an electrode, and the like. A range of the value of each parameter is defined in advance as a welding condition, and a welder adjusts each parameter to satisfy the welding condition to perform the welding work. In addition, the welding state is, for example, an abnormality degree or a type of a welding defect, which is estimated based on welding data including a plurality of parameters measured by sensors (not represented) provided in each location of the welding device 20 and the vicinity of a welding part.

The data logger 30 acquires the above-described welding data.

The welding assistance device 10 estimates the type of a welding defect or the factor of the welding defect generated in the welding part based on the welding data acquired by the data logger 30. In addition, the welding assistance device 10 sets (changes) a recommendation range of a value of a parameter (factor parameter) that is a factor of the welding defect among welding conditions defined in advance, based on the estimation result. Further, the welding assistance device 10 displays the recommendation range of the value of each parameter defined by the welding condition during welding work, on the display device 40 to assist the welding work of the welder.

### (Functional Configuration of Welding Assistance Device)

The welding assistance device 10 includes a processor 11, a memory 12, a storage 13, and a communication interface 14.

The processor 11 operates in accordance with a predetermined program to exhibit functions as an acquisition unit 110, an estimation unit 111, an analysis unit 112, a setting unit 113, an output unit 114, and a learning unit 115.

The acquisition unit 110 acquires welding data from the data logger 30.

The estimation unit 111 estimates the type of a welding defect occurring at a welding portion based on a defect estimation model M using the welding data as an explanatory variable and using the type of the welding defect as an objective variable. The type of the welding defect is, for example, a surface defect, a volume defect, porosity, slag inclusion, and the like.

The analysis unit 112 specifies a factor parameter that contributes to the occurrence of a welding defect based on the welding data and the type of the welding defect estimated by the estimation unit 111 and generates analysis data indicating a correlation between a magnitude of a value of the specified factor parameter and a magnitude of a contribution degree to the welding defect.

The setting unit 113 sets a recommendation range of the value of the factor parameter in welding work such that the contribution degree does not exceed a predetermined allowable range, based on the analysis data. In addition, a user (a welder, a technician who determines welding conditions, or the like) may specify the factor parameter and designate the recommendation range based on the analysis data. In this case, the setting unit 113 sets the recommendation range of the value of the factor parameter based on information designated by the user. Welding condition data T in which the recommendation range of the value of each parameter is defined in advance is recorded in the storage 13. The setting unit 113 overwrites and records the recommendation range of the set value of the factor parameter in the welding condition data T.

The output unit 114 outputs the analysis data generated by the analysis unit 112 to the display device 40 and displays the analysis data. In addition, during the welding work, the output unit 114 outputs assistance information including the recommendation range of the value of each parameter based on the welding condition data T recorded in the storage 13 and displays the assistance information on the display device 40.

The learning unit 115 performs supervised learning based on the welding data collected in a period from the start to the end of welding at the welding portion and the position and the type of the welding defect generated at the welding portion to construct the defect estimation model M.

The memory 12 has a memory area necessary for the operation of the processor 11.

The storage 13 is a so-called auxiliary storage device and is, for example, a hard disk drive (HDD) or a solid-state drive (SSD). The storage 13 records the welding data collected from the data logger 30 by the acquisition unit 110, the defect estimation model M constructed by the learning unit 115, the welding condition data T recorded by the setting unit 113, and the like.

The communication interface 14 is an interface for transmitting and receiving various types of information (signals) to and from an external device (data logger 30, display device 40, and the like).

### (Regarding Learning Process of Defect Estimation Model)

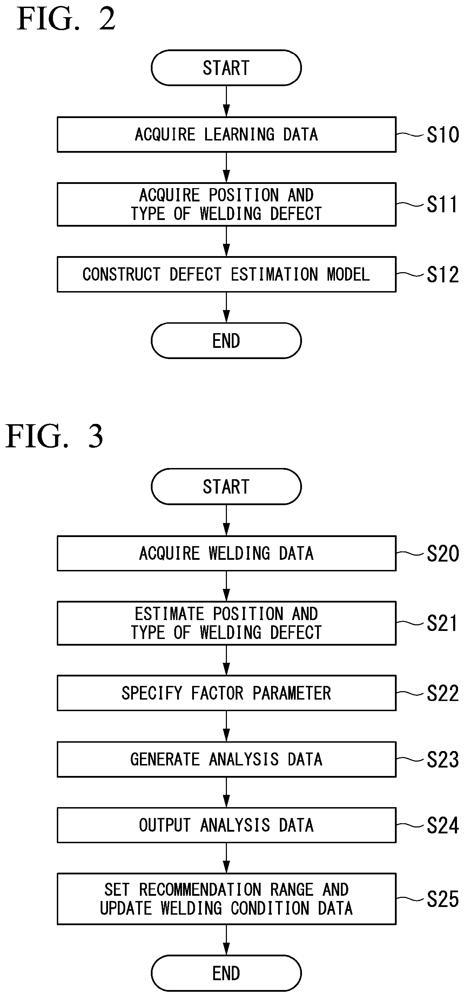

FIG. 2 is a flowchart representing an example of a learning process in the welding assistance device according to the embodiment of the present disclosure.

Here, a flow of a process in which the welding assistance device 10 learns the defect estimation model M will be described with reference to FIG. 2.

First, the acquisition unit 110 acquires welding data collected by the data logger 30 in a period from the start of welding to the end of welding at the welding portion (Step S10).

In addition, when welding work is completed, the user performs non-destructive inspection (radiographic inspection, ultrasonic inspection, or the like) on the welding portion to specify the position and the type of a welding defect. The acquisition unit 110 acquires the position and the type of the welding defect detected from the welding portion by the user (Step S11).

Then, the learning unit 115 performs supervised learning based on the welding data acquired by the acquisition unit 110 and the position and the type of the welding defect to construct the defect estimation model M (Step S12). The defect estimation model M is a model that outputs the position and the type of the welding defect as an objective variable when the welding data is input as an explanatory variable. As the supervised learning, for example, the random forest algorithm may be used. The defect estimation model M constructed by the learning unit 115 is recorded in the storage 13.

The welding assistance device 10 may collect the learning data each time the welding work is performed and may relearn (update) the defect estimation model M.

### (Regarding Analysis Process of Welding Defect)

FIG. 3 is a flowchart representing an example of an analysis process of the welding defect in the welding assistance device according to the embodiment of the present disclosure.

Here, a flow of the analysis process of the welding defect in the welding assistance device 10 will be described with reference to FIG. 3.

First, the acquisition unit 110 acquires welding data collected by the data logger 30 in a period from the start of welding to the end of welding at the welding portion (Step S20).

Then, the estimation unit 111 estimates the position and the type of the welding defect occurring at the welding portion based on the defect estimation model M recorded in the storage 13 and the acquired welding data (Step S21).

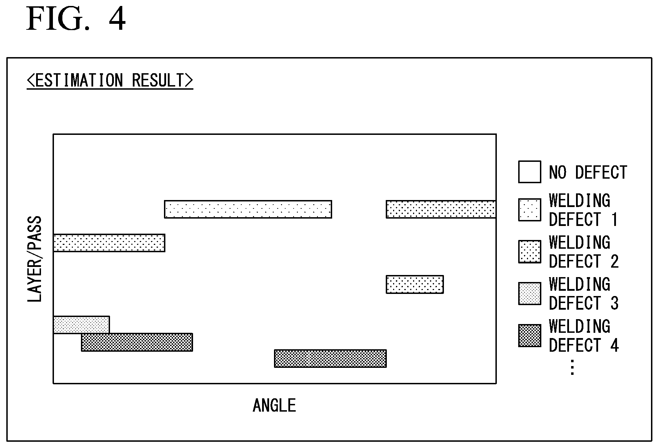

FIG. 4 is a diagram representing an example of an estimation result of the welding defect according to the embodiment of the present disclosure.

FIG. 4 represents an example of an estimation result of the position and the type of the welding defect by the estimation unit 111. As represented in FIG. 4, the estimation unit 111 may output the estimation result of the position and the type of the welding defect as a heat map. Welding defects 1, 2, 3, 4, ... etc. represent different types of welding defects (for example, surface defects, volume defects, porosity, slag inclusion, and the like). The vertical axis of the heat map indicates a layer and pass of welding, and the horizontal axis indicates a position in a welding direction. For example, in a case where a structure having a ring shape such as a pipe is welded while being rotated, the position in the welding direction may be indicated by an angle of the structure.

Then, the analysis unit 112 analyzes, for each type of welding defect, a parameter having an influence on the estimation result, that is, a parameter that is a factor of the welding defect, based on the welding data and the estimation result of the estimation unit 111.

In the model learned by the supervised learning, it is not possible to know an explanatory variable (parameter) and the value thereof which are factors for the occurrence of the welding defect. In this case, the user can recognize the position and the type of the welding defect occurring by the defect estimation model M, but it is difficult to determine how to change the welding condition (the value of each parameter) in order to suppress the occurrence of the welding defect.

Therefore, the analysis unit 112 according to the present embodiment performs a process of generating analysis data in which the explanatory variable causing the welding defect and the physical quantity thereof are visualized by using a Shapley additive explanations (SHAP) technology.

Specifically, first, the analysis unit 112 specifies a factor parameter that contributes to the occurrence of the welding defect estimated by the estimation unit 111 (Step S22). For example, as represented in FIG. 4, it is assumed that the occurrence of four types of welding defects 1 to 4 is estimated. In this case, the analysis unit 112 specifies the factor parameter of each of the four types of welding defects 1 to 4.

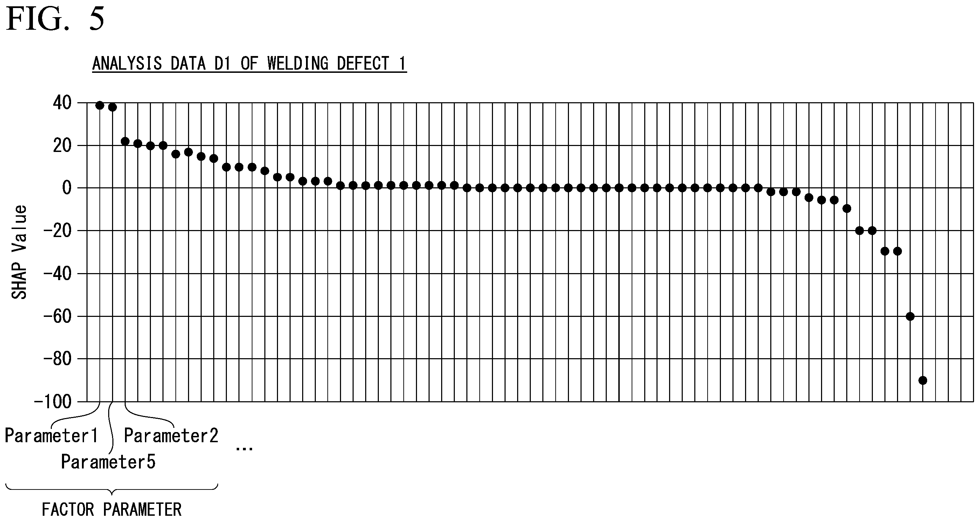

FIG. 5 is a first diagram representing an example of the analysis data according to the embodiment of the present disclosure.

Here, an example in which the analysis unit 112 specifies the factor parameter of the welding defect 1 will be described with reference to FIG. 5. As represented in FIG. 5, the analysis unit 112 calculates a SHAP value (contribution degree) representing the degree to which each parameter contributes to the occurrence of the welding defect 1, by using SHAP, and generates analysis data D1 in which each parameter is sorted in descending order of the contribution degree. In addition, the analysis unit 112 specifies a predetermined number (for example, three) of parameters from parameters having a larger SHAP value as the factor parameters that are the factors that cause the welding defect 1. In the example of FIG. 5, the analysis unit 112 specifies the three parameters 1, 5, and 2 having the three largest SHAP values as the factor parameters of the welding defect 1. In addition, the analysis unit 112 also specifies the factor parameters of the welding defects 2 to 4 in the similar manner.

Then, the analysis unit 112 generates analysis data indicating a correlation between the magnitude of the value of the factor parameter and the magnitude of the SHAP value for each of the specified factor parameters (Step S23).

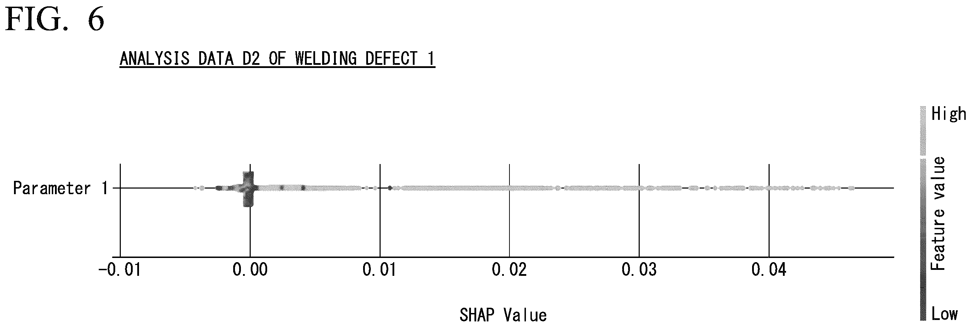

FIG. 6 is a second diagram representing the example of the analysis data according to the embodiment of the present disclosure.

Here, an example of generating a parameter 1 which is one of the factor parameters of the welding defect 1, and analysis data D2 will be described with reference to FIG. 6.

As represented in FIG. 6, the analysis unit 112 generates the analysis data D2 in which each piece of sampling data (measured value at each time) of the parameter 1 measured during welding is plotted according to the magnitude of the SHAP value. The horizontal axis indicates the magnitude of the SHAP value. In addition, each plot is indicated by a different color according to the magnitude of the value of the sampling data. In the example of FIG. 6, it can be read from the analysis data D2 that the SHAP value tends to increase as the value of the parameter 1 increases.

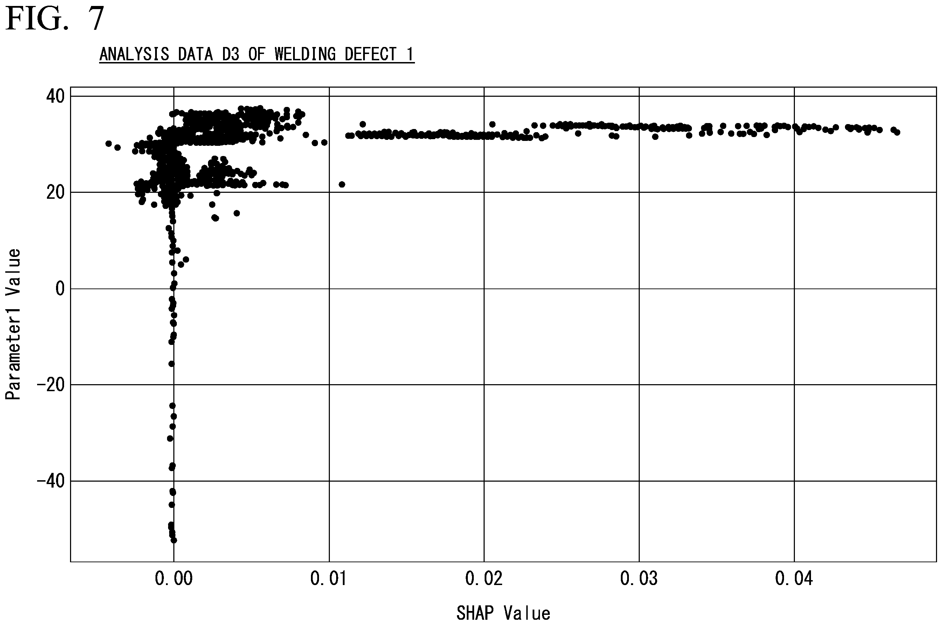

FIG. 7 is a third diagram representing the example of the analysis data according to the embodiment of the present disclosure.

In addition, as represented in FIG. 7, the analysis unit 112 generates analysis data D3 plotted according to the magnitude of the value of each piece of sampling data and the magnitude of the SHAP value. The vertical axis indicates the magnitude of the value of the parameter 1, and the horizontal axis indicates the magnitude of the SHAP value. The analysis data D3 is a scatter diagram representing a correlation between the magnitude of the value of the parameter 1 and the magnitude of the SHAP value. By referring to the analysis data D3, it is possible to easily understand how large the value of the parameter 1 is specifically in order to increase the SHAP value. In the example of FIG. 7, it can be read from the analysis data D3 that the SHAP value tends to be large when the value of the parameter 1 is 33 to 35.

In addition, the analysis unit 112 generates the analysis data D2 and D3 for the other factor parameters of the welding defect 1 and the factor parameters of the other welding defects 2 to 4 in the similar manner.

Then, the output unit 114 outputs the analysis data D1 to D3 generated by the analysis unit 112 to the display device 40 and displays the analysis data D1 to D3 (Step S24).

The user adjusts the recommendation range of the value of the factor parameter of the welding defect among the parameters defined in the welding condition data T with reference to the analysis data D1 to D3 of the welding defects 1 to 4.

For example, as represented in FIG. 7, it can be read from the analysis data D3 of the welding defect 1 that, when the value of the parameter 1 is 33 to 35, the SHAP value becomes large, and the welding defect 1 is likely to occur. Therefore, the user changes the recommendation range of the value of the parameter 1 such that the welding defect 1 is less likely to occur. Specifically, the user performs an operation of designating the recommendation range of the value of the parameter 1 to be a range other than 33 to 35. The setting unit 113 sets the recommendation range of the parameter 1 according to the designation operation of the user (Step S25), and overwrites and records the recommendation range in the welding condition data T. As a result, the welding condition data T is updated such that the welding defect 1 is less likely to occur.

In Step S25, the setting unit 113 may automatically set the recommendation range of the parameter 1 to exclude the value of the parameter 1 that causes the SHAP value to be equal to or greater than a predetermined threshold value, based on the analysis data D1 to D3 for each welding defect. The threshold value is, for example, a value designated by the user.

For example, it is assumed that the initial setting of the recommendation range of the value of the parameter 1 is 30 to 35 and the SHAP value is equal to or greater than the threshold value when the value of the parameter 1 is 33 to 35. In this case, the setting unit 113 excludes 33 to 35 in which the SHAP value is equal to or greater than the threshold value and sets a range of 27 to 32 close to the initial setting as the recommendation range of the value of the parameter 1. The setting unit 113 may display the recommendation range temporarily set in the analysis data D3 in the superimposed manner and may officially adopt the recommendation range in a case where the user approves the recommendation range. In a case where the user performs an operation of changing the recommendation range, the setting unit 113 adopts the recommendation range after the change by the user.

In addition, from the analysis data D1 to D3 of each welding defect, the same parameter may be specified as the factor parameter for a plurality of types of welding defects. For example, it is assumed that the parameter 1 is one of the factor parameters for both the welding defect 1 and the welding defect 2. In addition, it is assumed that it has been read that the welding defect 1 is likely to occur when the value of the parameter 1 is 33 to 35, and the welding defect 2 is likely to occur when the value of the parameter 1 is 35 to 37. In this case, the user (or the setting unit 113) sets the recommendation range of the value of the parameter 1 to avoid both the range (33 to 35) in which the welding defect 1 is likely to occur and the range (35 to 37) in which the welding defect 2. As described above, by referring to the analysis data D1 to D3 for each welding defect, it is possible to appropriately adjust the welding conditions so that it is possible to suppress a plurality of types of welding defects.

In addition, the user may adjust the recommendation range of the value of each factor parameter in consideration of the influence of a plurality of factor parameters of the welding defect 1 on each other, based on the analysis data D1 to D3, metallurgical knowledge, and the like. In addition, the user may adjust the recommendation range of the value of the other parameter having an influence on the factor parameter. As described above, the welding assistance device 10 provides the user with the analysis data D1 to D3 in which the user easily understands the contribution degree of each parameter to the welding defect, thereby enabling the user to delve deeper into the cause of the welding defect together with the knowledge of the user. As a result, it is possible to appropriately improve the welding conditions so that the welding defects are less likely to occur.

### (Regarding Presentation Process of assistance information)

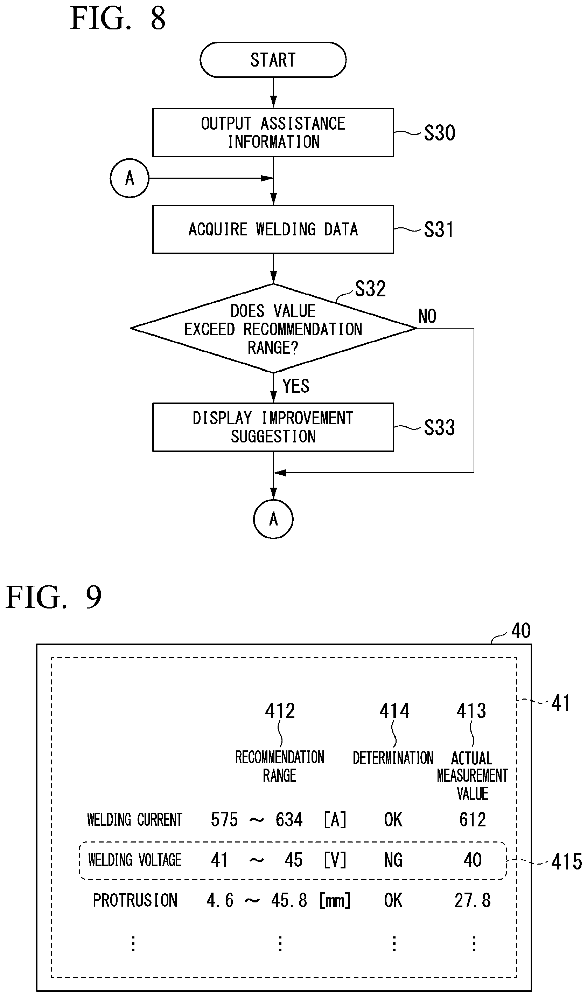

FIG. 8 is a flowchart representing an example of a presentation process of assistance information in the welding assistance device according to the embodiment of the present disclosure.

FIG. 9 is a diagram representing an example of the assistance information according to the embodiment of the present disclosure.

In addition, when the welder performs welding work, the welding assistance device 10 displays the welding conditions set by the setting unit 113 on the display device 40 as assistance information 41. The welder performs the welding work while checking the assistance information 41. Here, a flow of a process in which the welding assistance device 10 presents the assistance information 41 will be described with reference to FIGS. 8 and 9.

First, when the welding work is started, the output unit 114 reads the welding condition data T from the storage 13 and outputs and displays the assistance information 41 including the recommendation range of the value of each parameter on the display device 40 (Step S30). The welding condition data T is data in which the recommendation range of the value of the factor parameter of the welding defect is updated in the above-described analysis process.

In addition, the acquisition unit 110 acquires the welding data from the data logger 30 in real time (Step S31). The welding data includes a measured value of each parameter.

As represented in FIG. 9, in the assistance information 41, a recommendation range 412 of the value of each parameter read from the welding condition data T and an actual measurement value 413 of each parameter acquired by the acquisition unit 110 are displayed.

In addition, the output unit 114 may determine whether the actual measurement value 413 of each parameter exceeds the recommendation range 412, based on the welding condition data T and the welding data acquired by the acquisition unit 110 (Step S32).

In a case where the actual measurement value 413 of the parameter does not exceed the recommendation range 412 (Step S32; NO), the output unit 114 sets a determination result 414 of the parameter to "OK (no problem)".

On the other hand, in a case where the actual measurement value 413 of the parameter exceeds the recommendation range 412 (Step S32; YES), the output unit 114 sets the determination result 414 of the parameter to "NG (with problem)". In addition, in this case, the output unit 114 additionally displays an improvement suggestion display 415 for urging improvement by emphasizing this parameter with a frame, a background color, a text color, or the like (Step S33).

The welding assistance device 10 repeatedly executes the processes of Steps S31 to S33 during the welding work. In addition, the welder refers to the assistance information 41 displayed on the display device 40 and operates the welding device 20 to, for example, change or maintain the welding conditions such that the actual measurement value 413 of each parameter falls within the recommendation range 412. In addition, in a case where the actual measurement value 413 of each parameter exceeds the recommendation range 412 (in a case where the improvement suggestion display 415 is displayed), the welder changes the welding conditions so that the actual measurement value 413 is quickly within the recommendation range 412. Since the recommendation range 412 is a range of values in which the welding defect is less likely to occur, the welder performs the welding work according to the recommendation range 412, thereby making it possible to suppress the occurrence of the welding defect.

### (Actions and Effects)

As described above, the welding assistance device 10 according to the present embodiment includes the acquisition unit 110 that acquires the welding data, the estimation unit 111 that estimates the type of the welding defect occurring at the welding portion based on the defect estimation model M, and the analysis unit 112 that specifies the factor parameter of the welding defect based on the welding data and the estimation result of the estimation unit 111 and generates the analysis data indicating the correlation between the magnitude of the value of the factor parameter and the magnitude of the contribution degree (SHAP value) to the welding defect.

In this manner, the welding assistance device 10 can provide the user with analysis data that makes it possible to easily know the parameter and the value which easily cause the welding defect, for each welding defect. As a result, the user can appropriately set the recommendation range of the value of the parameter that enables suppression of the welding defect, based on the analysis data.

In addition, the welding assistance device 10 further includes the setting unit 113 that sets the recommendation range of the value of the factor parameter not to include the value of the factor parameter that causes the contribution degree to be equal to or greater than a predetermined threshold value.

In this manner, the welding assistance device 10 can automatically set the recommendation range of the value of the parameter that enables suppression of the welding defect, based on the analysis data.

In addition, in a case where the occurrences of a plurality of different types of welding defects are estimated, the analysis unit 112 generates analysis data for each type of welding defect. In a case where the factor parameters are common between a plurality of types of welding defects, the setting unit 113 sets the recommendation range of the values of the factor parameters not to include the values of the factor parameters that cause the contribution degree to the welding defects to be equal to or greater than the threshold value.

In this manner, the welding assistance device 10 can appropriately adjust the welding conditions to enable suppression of a plurality of types of welding defects.

In addition, the welding assistance device 10 further includes the output unit 114 that outputs the assistance information 41 including the recommendation range set by the setting unit 113.

In this manner, the welding assistance device 10 can provide the welder during the welding work with the range of the value of the parameter in which the welding defect is less likely to occur. As a result, it is possible to suppress the occurrence of the welding defect by allowing the welder to easily and appropriately adjust the value of the parameter regardless of the degree of proficiency.

In the above-described embodiment, the process of various types of processes of the welding assistance device 10 is stored in a computer-readable recording medium in a form of a program, and the various types of processes are executed by reading and executing the program by the computer. The computer-readable recording media include magnetic disks, magneto-optical disks, CD-ROMs, DVD-ROMs, semiconductor memories, and the like. Alternatively, this computer program may be distributed to a computer via a communication line, and the computer receiving the distribution may execute the program.

The above program may be for implementing part of the above-described functions. Further, the program may be a so-called difference file (difference program) capable of realizing the functions described above in combination with a program recorded in advance in the computer system.

Some embodiments of the present disclosure have been described above. However, all of these embodiments are only examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

### <Supplementary Notes>

The welding assistance device, the welding assistance method, and the program described in the above-described embodiment are ascertained as follows, for example.
(1) According to a first aspect of the present disclosure, a welding assistance device 10 includes an acquisition unit 110 configured to acquire welding data including a plurality of parameters indicating a welding state, an estimation unit 111 configured to estimate a type of a welding defect occurring at a welding portion based on a defect estimation model M using the welding data as an explanatory variable and using the type of the welding defect as an objective variable, and an analysis unit 112 configured to specify a factor parameter contributing to the occurrence of the welding defect based on the welding data and the estimated type of the welding defect and to generate analysis data indicating a correlation between a magnitude of a value of the specified factor parameter and a magnitude of a contribution degree to the welding defect.
   In this manner, the welding assistance device 10 can provide the user with analysis data that makes it possible to easily know the parameter and the value which easily cause the welding defect, for each welding defect. As a result, the user can appropriately set the recommendation range of the value of the parameter that enables suppression of the welding defect, based on the analysis data.
(2) According to a second aspect of the present disclosure, the welding assistance device 10 according to the first aspect further includes a setting unit 113 configured to set, based on the analysis data, a recommendation range of the value of the factor parameter at time of welding work not to include the value of the factor parameter that causes the contribution degree to be equal to or greater than a predetermined threshold value.
   In this manner, the welding assistance device 10 can automatically set the recommendation range of the value of the parameter that enables suppression of the welding defect, based on the analysis data.
(3) According to a third aspect of the present disclosure, in the welding assistance device 10 according to the second aspect, in a case where occurrences of different types of first welding defect and second welding defect of different types are estimated, the analysis unit 112 generates the analysis data of each of the first welding defect and the second welding defect, and, in a case where a factor parameter of the first welding defect is common to a factor parameter of the second welding defect, the setting unit 113 sets the recommendation range of the value of the factor parameter not to include the value of the factor parameter that causes the contribution degree to both the first welding defect and the second welding defect to be equal to or greater than the threshold value.
   In this manner, the welding assistance device 10 can appropriately adjust the welding conditions to enable suppression of a plurality of types of welding defects.
(4) According to a fourth aspect of the present disclosure, the welding assistance device 10 according to the second or third aspect further includes an output unit 114 configured to output assistance information 41 including the recommendation range set by the setting unit 113.
   In this manner, the welding assistance device 10 can provide the welder during the welding work with the range of the value of the parameter in which the welding defect is less likely to occur. As a result, it is possible to suppress the occurrence of the welding defect by allowing the welder to easily and appropriately adjust the value of the parameter regardless of the degree of proficiency.
(5) According to a fifth aspect of the present disclosure, a welding assistance method includes a step of acquiring welding data including a plurality of parameters indicating a welding state, a step of estimating a type of a welding defect occurring at a welding portion based on a defect estimation model M using the welding data as an explanatory variable and using the type of the welding defect as an objective variable, and a step of specifying a factor parameter contributing to the occurrence of the welding defect based on the welding data and the estimated type of the welding defect and generating analysis data indicating a correlation between a magnitude of a value of the specified factor parameter and a magnitude of a contribution degree to the welding defect.
(6) According to a sixth aspect of the present disclosure, a program causes a welding assistance device 10 to perform: a step of acquiring welding data including a plurality of parameters indicating a welding state; a step of estimating a type of a welding defect occurring at a welding portion based on a defect estimation model M using the welding data as an explanatory variable and using the type of the welding defect as an objective variable; and a step of specifying a factor parameter contributing to the occurrence of the welding defect based on the welding data and the estimated type of the welding defect and generating analysis data indicating a correlation between a magnitude of a value of the specified factor parameter and a magnitude of a contribution degree to the welding defect.

### INDUSTRIAL APPLICABILITY

With the welding assistance device, the welding assistance method, and the program according to the present disclosure, it is possible to suppress the occurrence of a welding defect in welding work performed by a welder.

### REFERENCE SIGNS LIST

1: Welding assistance system
10: Welding assistance device
11: Processor
110: Acquisition unit
111: Estimation unit
112: Analysis unit
113: Setting unit
114: Output unit
115: Learning unit
12: Memory
13: Storage
14: Communication interface
20: Welding device
30: Data logger
40: Display device

## Claims

1. A welding assistance device (10) comprising:
an acquisition unit (110) configured to acquire welding data including a plurality of parameters indicating a welding state; **characterized by**
an estimation unit (111) configured to estimate a type of a welding defect occurring at a welding portion based on a defect estimation model (M) using the welding data as an explanatory variable and using the type of the welding defect as an objective variable; and
an analysis unit (112) configured to specify a factor parameter contributing to the occurrence of the welding defect based on the welding data and the estimated type of the welding defect and to generate analysis data indicating a correlation between a magnitude of a value of the specified factor parameter and a magnitude of a contribution degree to the welding defect.

2. The welding assistance device (10) according to Claim 1, further comprising:
a setting unit (113) configured to set, based on the analysis data, a recommendation range of the value of the factor parameter at time of welding work not to include the value of the factor parameter that causes the contribution degree to be equal to or greater than a predetermined threshold value.

3. The welding assistance device (10) according to Claim 2,
wherein, in a case where occurrences of different types of first welding defect and second welding defect are estimated, the analysis unit (112) is configured to generate the analysis data of each of the first welding defect and the second welding defect, and
in a case where a factor parameter of the first welding defect is common to a factor parameter of the second welding defect, the setting unit (113) is configured to set the recommendation range of the value of the factor parameter not to include the value of the factor parameter that causes the contribution degree to both the first welding defect and the second welding defect to be equal to or greater than the threshold value.

4. The welding assistance device (10) according to Claim 2 or 3, further comprising:
an output unit (114) configured to output assistance information including the recommendation range set by the setting unit (113).

5. A welding assistance method comprising:
a step (S20) of acquiring welding data including a plurality of parameters indicating a welding state; and **characterized by**:
a step (S21) of estimating a type of a welding defect occurring at a welding portion based on a defect estimation model (M) using the welding data as an explanatory variable and using the type of the welding defect as an objective variable; and
a step (S22) of specifying a factor parameter contributing to the occurrence of the welding defect based on the welding data and the estimated type of the welding defect and generating analysis data (S23) indicating a correlation between a magnitude of a value of the specified factor parameter and a magnitude of a contribution degree to the welding defect.

6. A program causing a welding assistance device (10) to perform:
a step (S20)
of acquiring welding data including a plurality of parameters indicating a welding state;
a step (S21) of estimating a type of a welding defect occurring at a welding portion based on a defect estimation model (M) using the welding data as an explanatory variable and using the type of the welding defect as an objective variable; and
a step (S22) of specifying a factor parameter contributing to the occurrence of the welding defect based on the welding data and the estimated type of the welding defect and generating analysis data (S23) indicating a correlation between a magnitude of a value of the specified factor parameter and a magnitude of a contribution degree to the welding defect.

## Patentansprüche

1. Schweißhilfsvorrichtung (10), umfassend:
eine Erfassungseinheit (110), die konfiguriert ist, um Schweißdaten zu erfassen, die eine Vielzahl von Parametern beinhalten, die einen Schweißzustand angeben; **gekennzeichnet durch**
eine Schätzeinheit (111), die konfiguriert ist, um basierend auf einem Fehlerschätzmodell (M) eine Art eines an einem Schweißabschnitt auftretenden Schweißfehlers zu schätzen, wobei die Schweißdaten als erklärende Variable und die Art des Schweißfehlers als Zielvariable verwendet werden; und
eine Analyseeinheit (112), die konfiguriert ist, um basierend auf den Schweißdaten und der geschätzten Art des Schweißfehlers einen Faktorparameter zu spezifizieren, der zum Auftreten des Schweißfehlers beiträgt, und Analysedaten zu erzeugen, die eine Korrelation zwischen einer Größe eines Werts des spezifizierten Faktorparameters und einer Größe eines Beitragsgrads zu dem Schweißfehler angeben.

2. Schweißhilfsvorrichtung (10) nach Anspruch 1, ferner umfassend:
eine Einstelleinheit (113), die konfiguriert ist, um basierend auf den Analysedaten einen Empfehlungsbereich des Werts des Faktorparameters zum Zeitpunkt der Schweißarbeit einzustellen, der den Wert des Faktorparameters nicht enthält, der bewirkt, dass der Beitragsgrad gleich wie oder größer als ein vorbestimmter Schwellenwert ist.

3. Schweißhilfsvorrichtung (10) nach Anspruch 2,
wobei in einem Fall, in dem ein Auftreten unterschiedlicher Arten eines ersten Schweißfehlers und eines zweiten Schweißfehlers geschätzt wird, die Analyseeinheit (112) konfiguriert ist, um die Analysedaten für jeden von dem ersten Schweißfehler und dem zweiten Schweißfehler zu erzeugen, und
in einem Fall, in dem ein Faktorparameter des ersten Schweißfehlers mit einem Faktorparameter des zweiten Schweißfehlers gemeinsam ist, die Einstelleinheit (113) konfiguriert ist, um den Empfehlungsbereich des Werts des Faktorparameters einzustellen, sodass er den Wert des Faktorparameters nicht enthält, der bewirkt, dass der Beitragsgrad sowohl zu dem ersten Schweißfehler als auch zu dem zweiten Schweißfehler gleich wie oder größer als der Schwellenwert ist.

4. Schweißhilfsvorrichtung (10) nach Anspruch 2 oder 3, ferner umfassend:
eine Ausgabeeinheit (114), die konfiguriert ist, um Hilfsinformationen auszugeben, die den von der Einstelleinheit (113) eingestellten Empfehlungsbereich beinhalten.

5. Schweißhilfsverfahren, umfassend:
einen Schritt (S20) eines Erfassens von Schweißdaten, die eine Vielzahl von Parametern beinhalten, die einen Schweißzustand angeben; und **gekennzeichnet durch**
einen Schritt (S21) eines Schätzens einer Art eines an einem Schweißabschnitt auftretenden Schweißfehlers basierend auf einem Fehlerschätzmodell (M), wobei die Schweißdaten als erklärende Variable und die Art des Schweißfehlers als Zielvariable verwendet werden; und
einen Schritt (S22) eines Spezifizierens eines Faktorparameters, der zum Auftreten des Schweißfehlers beiträgt, basierend auf den Schweißdaten und der geschätzten Art des Schweißfehlers, und eines Erzeugens von Analysedaten (S23), die eine Korrelation zwischen einer Größe eines Werts des spezifizierten Faktorparameters und einer Größe eines Beitragsgrads zu dem Schweißfehler angeben.

6. Programm, das eine Schweißhilfsvorrichtung (10) veranlasst, Folgendes durchzuführen:
einen Schritt (S20) eines Erfassens von Schweißdaten, die eine Vielzahl von Parametern beinhalten, die einen Schweißzustand angeben;
einen Schritt (S21) eines Schätzens einer Art eines an einem Schweißabschnitt auftretenden Schweißfehlers basierend auf einem Fehlerschätzmodell (M), wobei die Schweißdaten als erklärende Variable und die Art des Schweißfehlers als Zielvariable verwendet werden; und
einen Schritt (S22) eines Spezifizierens eines Faktorparameters, der zum Auftreten des Schweißfehlers beiträgt, basierend auf den Schweißdaten und der geschätzten Art des Schweißfehlers, und eines Erzeugens von Analysedaten (S23), die eine Korrelation zwischen einer Größe eines Werts des spezifizierten Faktorparameters und einer Größe eines Beitragsgrads zu dem Schweißfehler angeben.

## Revendications

1. Dispositif d'aide au soudage (10), comportant :
une unité d'acquisition (110) configurée pour acquérir des données de soudage comprenant une pluralité de paramètres indiquant un état de soudage ; **caractérisé par**
une unité d'estimation (111) configurée pour estimer un type d'un défaut de soudage se produisant au niveau d'une partie de soudage sur la base d'un modèle d'estimation de défaut (M) utilisant les données de soudage en tant que variable explicative et utilisant le type du défaut de soudage en tant que variable objective ; et
une unité d'analyse (112) configurée pour spécifier un paramètre facteur contribuant à l'apparition du défaut de soudage sur la base des données de soudage et du type estimé du défaut de soudage, et pour générer des données d'analyse indiquant une corrélation entre une amplitude d'une valeur du paramètre facteur spécifié et une amplitude d'un degré de contribution au défaut de soudage.

2. Dispositif d'aide au soudage (10) selon la revendication 1, comportant en outre :
une unité de réglage (113) configurée pour régler, sur la base des données d'analyse, une plage de recommandation de la valeur du paramètre facteur au moment du travail de soudage de manière à ne pas inclure la valeur du paramètre facteur qui amène le degré de contribution à être égal ou supérieur à une valeur seuil prédéterminée.

3. Dispositif d'aide au soudage (10) selon la revendication 2,
dans lequel, dans un cas où des occurrences de différents types d'un premier défaut de soudage et d'un deuxième défaut de soudage sont estimées, l'unité d'analyse (112) est configurée pour générer les données d'analyse de chacun du premier défaut de soudage et du deuxième défaut de soudage, et
dans un cas où un paramètre facteur du premier défaut de soudage est commun à un paramètre facteur du deuxième défaut de soudage, l'unité de réglage (113) est configurée pour régler la plage de recommandation de la valeur du paramètre facteur de manière à ne pas inclure la valeur du paramètre facteur qui amène le degré de contribution, tant au premier défaut de soudage qu'au deuxième défaut de soudage, à être égal ou supérieur à la valeur seuil.

4. Dispositif d'aide au soudage (10) selon la revendication 2 ou 3, comportant en outre :
une unité de sortie (114) configurée pour fournir en sortie des informations d'aide comprenant la plage de recommandation réglée par l'unité de réglage (113).

5. Procédé d'aide au soudage, comprenant :
une étape (S20) d'acquisition de données de soudage comprenant une pluralité de paramètres indiquant un état de soudage ; et **caractérisé par**
une étape (S21) d'estimation d'un type d'un défaut de soudage se produisant au niveau d'une partie de soudage sur la base d'un modèle d'estimation de défaut (M) utilisant les données de soudage en tant que variable explicative et utilisant le type du défaut de soudage en tant que variable objective ; et
une étape (S22) de spécification d'un paramètre facteur contribuant à l'apparition du défaut de soudage sur la base des données de soudage et du type estimé du défaut de soudage, et de génération de données d'analyse (S23) indiquant une corrélation entre une amplitude d'une valeur du paramètre facteur spécifié et une amplitude d'un degré de contribution au défaut de soudage.

6. Programme amenant un dispositif d'aide au soudage (10) à exécuter :
une étape (S20) d'acquisition de données de soudage comprenant une pluralité de paramètres indiquant un état de soudage ;
une étape (S21) d'estimation d'un type d'un défaut de soudage se produisant au niveau d'une partie de soudage sur la base d'un modèle d'estimation de défaut (M) utilisant les données de soudage en tant que variable explicative et utilisant le type du défaut de soudage en tant que variable objective ; et
une étape (S22) de spécification d'un paramètre facteur contribuant à l'apparition du défaut de soudage sur la base des données de soudage et du type estimé du défaut de soudage, et de génération de données d'analyse (S23) indiquant une corrélation entre une amplitude d'une valeur du paramètre facteur spécifié et une amplitude d'un degré de contribution au défaut de soudage.
